# EUROPEAN PATENT APPLICATION

(11) **EP 3 835 210 A1**
(43) Date of publication of application: **16.06.2021**
(21) Application number: 20213779.0
(22) Date of filing: 14.12.2020
(51) Int. Cl.: B64D 15/12, F03D 80/40, C09D 5/16

(54) **ICE PROTECTION SYSTEM FOR ROTARY BLADES**

(30) Priority: 12.12.2019 US 201916711867
(71) Applicant: Goodrich Corporation, Charlotte, NC 28217-4578 (US)
(72) Inventor: HU, Jin, Hudson, OH 44236 (US); SLANE, Casey, Tallmadge, OH 44278 (US); BOTURA, Galdemir Cezar, Akron, OH 44313 (US); CHING, Nathaniel, Hartville, OH 44632 (US)
(74) Representative: Dehns

(57) **Abstract**

An ice protection system may include a rotary blade (220), an electrothermal heater (210), and a low ice adhesion surface (230). The low ice adhesion surface may include an adhesion strength below 100 kPa. The rotary blade may be disposed between the electrothermal heater and the low ice adhesion surface. The electrothermal heater may be disposed between the low ice adhesion surface and the rotary blade. The low ice adhesion surface may include a coating or a surface treatment.

## Description

### FIELD

The present disclosure relates to ice protection systems for various airfoils, and more particularly, to ice phobic coatings for use with electrothermal heating elements.

### BACKGROUND

Ice accretion may occur on various airfoils, such as helicopter rotors, propellers, proprotors, wind turbine, or the like, due to cold temperatures at high altitudes. Electrothermal heaters alone may consume large power and/or energy, resulting in greater weight and cost of an ice protection system.

### SUMMARY

An ice protection system is disclosed herein. The ice protection system comprises: a rotary blade; an electrothermal heater coupled to the rotary blade; and a low ice adhesion surface disposed at an outer most layer of the ice protection system, the outer most layer comprising a first material, the low ice adhesion surface configured to reduce an ice adhesion strength at the outer most layer by 10% or more relative to an outer most layer adhesion strength of the first material.

In various embodiments, the rotary blade is disposed between the low ice adhesion surface and the electrothermal heater. The electrothermal heater may be disposed between the rotary blade and the low ice adhesion surface. The low ice adhesion surface may be a coating. The coating may comprise polydimethylsiloxane (PDMS), at least one of nanoscale amorphous silica and super hydrophobic nanoparticles, and at least one of a non-reactive hydrophobic additive and a non-reactive hydrophilic additive. The coating may further comprise fluoride. The electrothermal heater may comprise a carbon nanotube (CNT) element.

A rotary blade assembly is disclosed herein. The rotary blade assembly comprises: an airfoil including a leading edge, a trailing edge, a pressure side and a suction side, the pressure side extending from the leading edge to the trailing edge, the suction side extending from the leading edge to the trailing edge; and an ice protection system disposed on at least one of the leading edge, the pressure side, and the suction side, the ice protection system comprising: the airfoil; an electrothermal heater coupled to the airfoil; and a low ice adhesion surface disposed at an outer most layer of the ice protection system, the outer most layer comprising a first material, the low ice adhesion surface configured to reduce an ice adhesion strength at the outer most layer by 10% or more relative to an outer most layer adhesion strength of the first material.

In various embodiments, the ice protection system may be disposed on the leading edge. The ice protection system may be disposed on at least one of the pressure side and the suction side of the airfoil. The airfoil may be disposed between the low ice adhesion surface and the electrothermal heater. The electrothermal heater may be disposed between the airfoil and the low ice adhesion surface. The low ice adhesion surface may be a coating. The coating may comprise polydimethylsiloxane (PDMS), at least one of nanoscale amorphous silica and super hydrophobic nanoparticles, and at least one of a non-reactive hydrophobic additive and a non-reactive hydrophilic additive. The coating may further comprise fluoride. The electrothermal heater may comprise a carbon nanotube (CNT) element.

A wind turbine is disclosed herein. The wind turbine comprises: a tower; a rotor coupled to a first end of the tower; a blade coupled to the rotor, the blade comprising: an ice protection system, comprising: an airfoil; an electrothermal heater coupled to the airfoil; and a low ice adhesion surface disposed at an outer most layer of the ice protection system, the outer most layer comprising a first material, the low ice adhesion surface configured to reduce an ice adhesion strength at the outer most layer by 10% or more relative to an outer most layer adhesion strength of the first material.

In various embodiments, the electrothermal heater may comprise a carbon nanotube (CNT) element. The low ice adhesion surface may comprise a coating including polydimethylsiloxane (PDMS), at least one of nanoscale amorphous silica and super hydrophobic nanoparticles, and at least one of a non-reactive hydrophobic additive and a non-reactive hydrophilic additive. The coating may further comprise fluoride.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a plain view showing a helicopter, in accordance with various embodiments;
FIG. 2 illustrates an ice protection system, in accordance with various embodiments;
FIG. 3 illustrates an ice protection system, in accordance with various embodiments;
FIG. 4 illustrates a rotary blade assembly, in accordance with various embodiments;
FIG. 5 illustrates a rotary blade assembly, in accordance with various embodiments;
FIG. 6 illustrates a rotary blade assembly, in accordance with various embodiments;
FIG. 7 illustrates a rotary blade assembly, in accordance with various embodiments; and
FIG. 8 illustrates a wind turbine, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact.

Disclosed herein is an ice protection system comprising an ice phobic and/or low ice adhesion surface. "Low ice adhesion" as described herein refers to an ice adhesion strength below 100 kPa. The ice protection system may further comprise an electrothermal heater. A rotary blade may be disposed between the electrothermal heater and the ice phobic and/or low ice adhesion surface. In various embodiments, the electrothermal heater may be disposed between the ice phobic and/or low ice adhesion surface and the rotary blade. In various embodiments, the rotary blade may be a main rotor for a helicopter, a propeller, a wind turbine, or any other rotary blade known in the art.

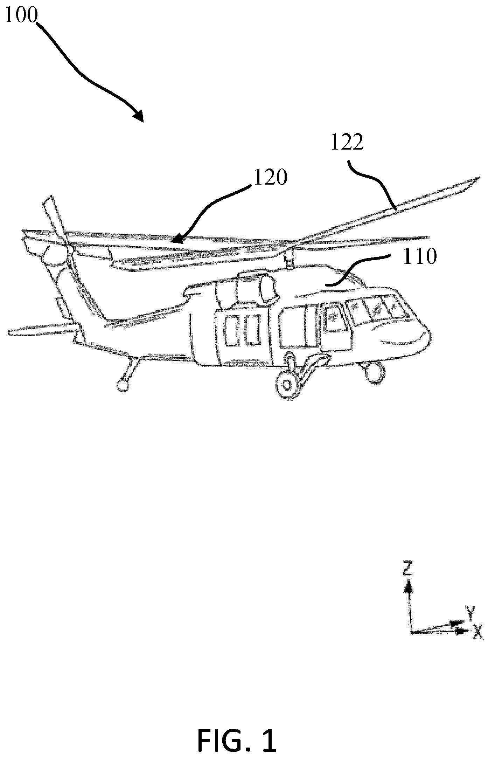

Referring now to FIG. 1, a helicopter 100, in accordance with various embodiments, is illustrated. The helicopter 100 includes an airframe 110 mechanically coupled to a main rotor 120. Main rotor 120 may include a plurality of rotary blades. The plurality of rotor blades may include a rotary blade 122. During operation of the helicopter 100, the main rotor 120 may be exposed to cold temperatures (e.g., below 0 °C) and/or benefit from an ice protection system.

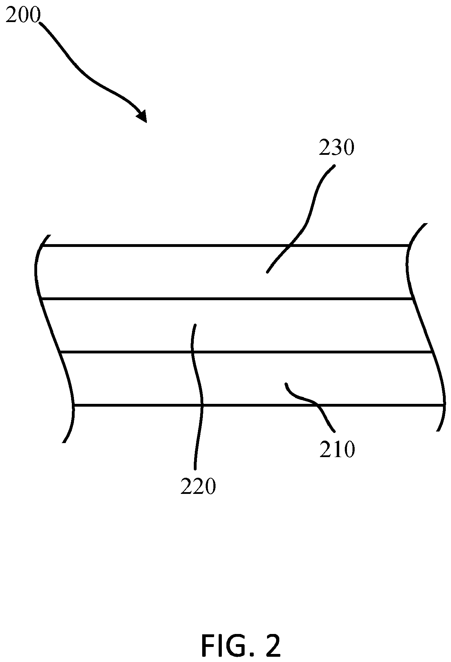

Referring now to FIG. 2, an ice protection system 200 for a portion of a rotary blade 220, in accordance with various embodiments, is illustrated. The ice protection system 200 comprises an electrothermal heater 210, a rotary blade 220, and a low ice adhesion surface 230. In various embodiments, the rotary blade 220 is disposed between the electrothermal heater 210 and the low ice adhesion surface 230. In various embodiments, the rotary blade 220 may comprise a nickel alloy, a titanium alloy, an aluminum alloy, a steel alloy, or the like. The rotary blade 220 may be configured to rotate about a central axis creating lift, thrust, energy, or the like.

In various embodiments, the electrothermal heater 210 may be any electrothermal heater known in the art. For example, the electrothermal heater 210 may comprise a wire wound element, a tapered watt density with foil technology element, such as that sold under the trademark HotProp®, which is available from Goodrich Corporation of Charlotte, North Carolina, USA, a electrothermal heater element, such as that sold under the trademark Duratherm®, which is available from Goodrich Corporation of Charlotte, North Carolina, USA, carbon nanotube (CNT) elements, or the like. The electrothermal heater 210 may be coupled to the rotary blade 220 by any method known in the art, such as an adhesive, a fastener, or the like.

In various embodiments, the low ice adhesion surface 230 comprises an ice adhesion strength below 100 kPa, or an ice adhesion strength below 40 kPa, or an ice adhesion strength below 10 kPa. Ice adhesion strength may be measured by any testing method known in the art. For example, ice adhesion strength may be measured under icing conditions at -23.3 °C, with mean volumetric droplet size of 20 µm, and liquid water content of 1.4 g/m³. The low ice adhesion surface 230 may be the outer most layer of the ice protection system 200. For example, the low ice adhesion surface 230 may be configured to be directly disposed to the atmosphere during operation of the rotary blade 220. In various embodiments, low ice adhesion surface 230 may comprise a surface treatment on an outer surface of rotary blade 220. For example, the outer surface of rotary blade 220 may be chemically treated and/or textured. In various embodiments, the low ice adhesion surface 230 may comprise a coating, such as an elastomeric based coating, a hard coating, a leaching of an oil based coating, a slip coating, or the like. In various embodiments, the low ice adhesion surface 230 may reduce an ice adhesion strength at the outer most layer of the ice protection system 200 by greater than 10%, or between 10% and 100%, or between 10% and 80%, or between 10% and 50% relative to the outer most layer without the low ice adhesion surface 230.

In various embodiments, a coating for a low ice adhesion surface 230 may comprise a base, a filler, and an additive. In various embodiments, the base may comprise polydimethylsiloxane (PDMS). In various embodiments, the filler may comprise nanoscale amorphous silica or super hydrophobic nanoparticles. In various embodiments, the additive may comprise non-reactive hydrophobic additives or non-reactive hydrophilic additives. In various embodiments, the coating for a low ice adhesion surface may further comprise a treatment, such as fluoride or the like.

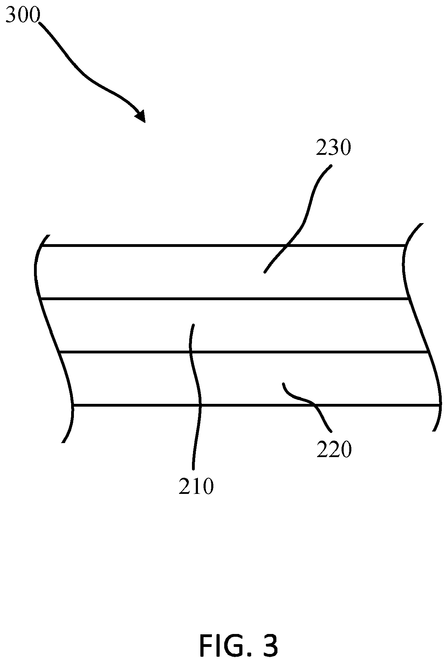

Referring now to FIG. 3, an ice protection system 300 for a portion of a rotary blade 220, in accordance with various embodiments, is illustrated. The ice protection system 300 comprises an electrothermal heater 210, a rotary blade 220, and a low ice adhesion surface 230. In various embodiments, the electrothermal heater 210 is disposed between the rotary blade 220 and the low ice adhesion surface 230.

In various embodiments, the electrothermal heater 210 may be coupled to the rotary blade 220 by any method known in the art, such as an adhesive, a fastener, or the like. In various embodiments, the low ice adhesion surface 230 may comprise a coating coupled to the electrothermal heater. The coating may include an elastomeric based coating, a hard coating, a leaching of an oil based coating, a slip coating, or the like.

In various embodiments, an ice protection system 200, 300 may reduce energy compared to typical ice protection systems. For example, an ice protection system 200, 300 may generate power savings of 20% - 30% compared to typical ice protection systems. In various embodiments, ice protection system 200, 300 may be configured to de-ice rotary blade 220 when exposed to icing conditions during operation.

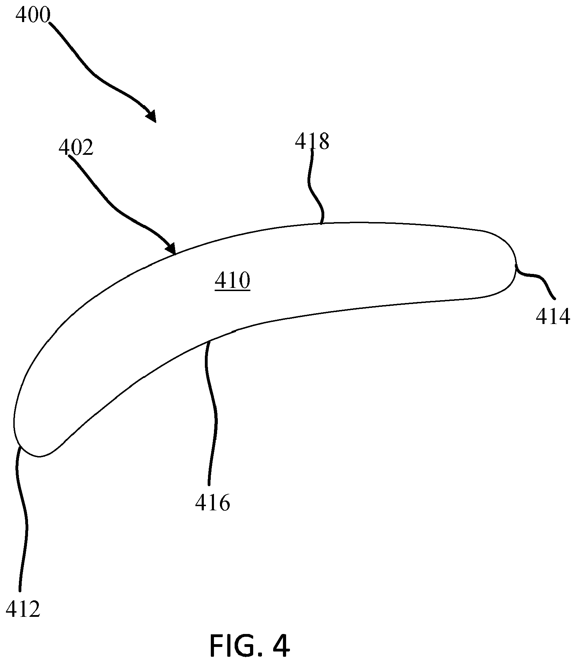

Referring now to FIG. 4, a cross-sectional view of a rotary blade assembly 400 is illustrated. In various embodiments, rotary blade assembly 400 comprises an airfoil 410 including a leading edge 412 and a trailing edge 414. The airfoil 410 further comprises a pressure side 416 extending from the leading edge 412 to the trailing edge 414 and a suction side 418 extending from the leading edge 412 to the trailing edge 414. The pressure side 416 may comprise a concave shape or the like. The suction side 418 may comprise a convex shape or the like. In various embodiments, an ice protection system 402 may be disposed around an entire airfoil 410 of a rotary blade. In various embodiments, ice protection system 402 may be configured in accordance with ice protection system 200 or ice protection system 300. For example, ice protection system 402 may extend from leading edge 412 to trailing edge 414 on both the pressure side 416 and the suction side 418. In various embodiments, the ice protection system 200 or ice protection system 300 is continuous about the exterior of airfoil 410 (i.e., continuous, or monolithic, about the perimeter of airfoil 410).

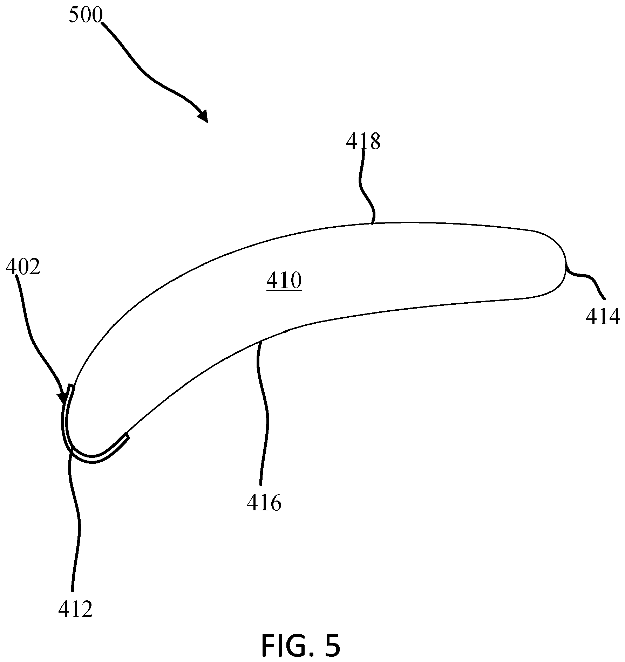

Referring now to FIG. 5, a cross-sectional view of a rotary blade assembly 500 is illustrated. In various embodiments, rotary blade assembly 400 comprises an airfoil 410 including a leading edge 412 and a trailing edge 414. The airfoil 410 further comprises a pressure side 416 extending from the leading edge 412 to the trailing edge 414 and a suction side 418 extending from the leading edge 412 to the trailing edge 414. In various embodiments, an ice protection system 402 may be disposed at the leading edge 412 of airfoil 410. In various embodiments, ice protection system 402 may be configured in accordance with ice protection system 200 or ice protection system 300.

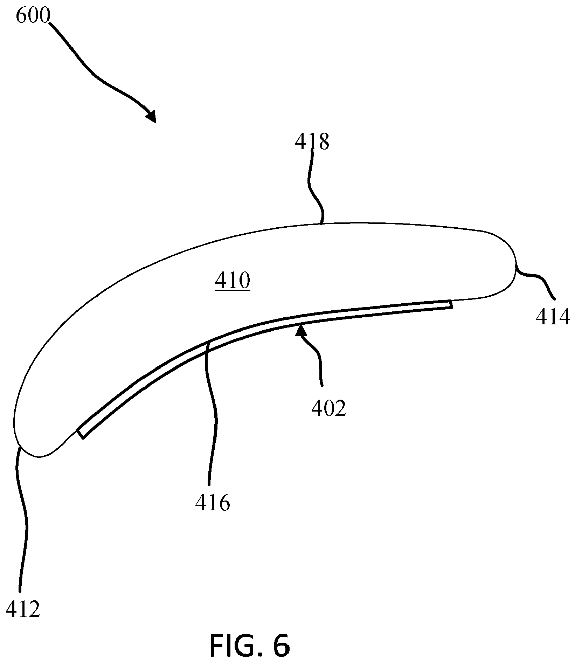

Referring now to FIG. 6, a cross-sectional view of a rotary blade assembly 600 is illustrated. In various embodiments, rotary blade assembly 600 comprises an airfoil 410 including a leading edge 412 and a trailing edge 414. The airfoil 410 further comprises a pressure side 416 extending from the leading edge 412 to the trailing edge 414 and a suction side 418 extending from the leading edge 412 to the trailing edge 414. In various embodiments, an ice protection system 402 may be disposed along the pressure side 416 of airfoil 410. In various embodiments, ice protection system 402 may be configured in accordance with ice protection system 200 or ice protection system 300.

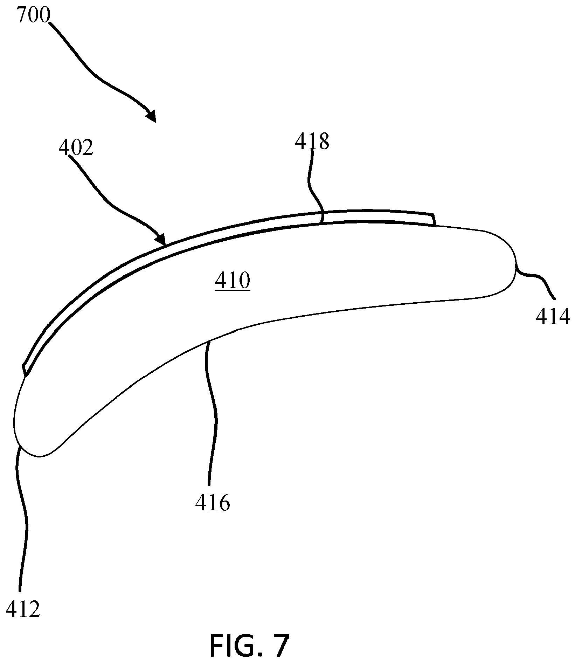

Referring now to FIG. 7, a cross-sectional view of a rotary blade assembly 700 is illustrated. In various embodiments, rotary blade assembly 600 comprises an airfoil 410 including a leading edge 412 and a trailing edge 414. The airfoil 410 further comprises a pressure side 416 extending from the leading edge 412 to the trailing edge 414 and a suction side 418 extending from the leading edge 412 to the trailing edge 414. In various embodiments, an ice protection system 402 may be disposed along the suction side 418 of airfoil 410. In various embodiments, ice protection system 402 may be configured in accordance with ice protection system 200 or ice protection system 300.

In various embodiments, any elements of rotary blade assembly 500, 600, 700 may be used in combination. In various embodiments, erosion at leading edge 412 of an airfoil may make rotary blade assembly 600, rotary blade assembly 700, or a combination of the two more practical.

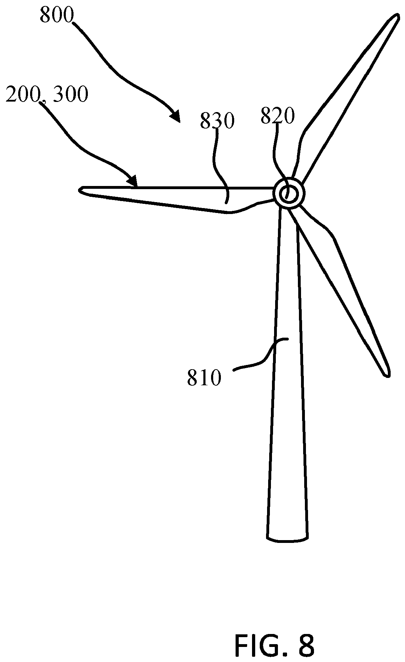

Referring now to FIG. 8, a wind turbine 800, in accordance with various embodiments, is illustrated. Wind turbine 800 comprises a tower 810, a rotor 820, and a blade 830. In various embodiments, wind turbine 800 includes a plurality of blade 830. In various embodiments, wind turbine 800 may include ice protection system 200 or ice protection system 300. In various embodiments, wind turbine 800 may include an electrothermal heater 210 that includes a CNT element. By utilizing a CNT element as the electrothermal heater 210 (Fig. 2) of wind turbine 800, the wind turbine 800 may be more durable and/or provide an ice protection system 200 or ice protection system 300 configured to last the life of wind turbine 800.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An ice protection system comprising:
a rotary blade (220);
an electrothermal heater (210) coupled to the rotary blade; and
a low ice adhesion surface (230) disposed at an outer most layer of the ice protection system, the outer most layer comprising a first material, the low ice adhesion surface configured to reduce an ice adhesion strength at the outer most layer by 10% or more relative to an outer most layer adhesion strength of the first material.

2. The ice protection system of claim 1, wherein the rotary blade is disposed between the low ice adhesion surface and the electrothermal heater.

3. The ice protection system of claim 1, wherein the electrothermal heater is disposed between the rotary blade and the low ice adhesion surface.

4. The ice protection system of any preceding claim, wherein the low ice adhesion surface is a coating.

5. The ice protection system of claim 4, wherein the coating comprises polydimethylsiloxane, PDMS, at least one of nanoscale amorphous silica and super hydrophobic nanoparticles, and at least one of a non-reactive hydrophobic additive and a non-reactive hydrophilic additive.

6. The ice protection system of claim 5, wherein the coating further comprises fluoride.

7. The ice protection system of any preceding claim, wherein the electrothermal heater comprises a carbon nanotube, CNT, element.

8. A rotary blade assembly, comprising:
an airfoil (410) including a leading edge (412), a trailing edge (414), a pressure side (416) and a suction side (418), the pressure side extending from the leading edge to the trailing edge, the suction side extending from the leading edge to the trailing edge; and
an ice protection system (300) as claimed in any preceding claim disposed on at least one of the leading edge, the pressure side, and the suction side,
the rotary clade comprising the airfoil.

9. The rotary blade assembly of claim 8, wherein the ice protection system is disposed on the leading edge.

10. The rotary blade assembly of claim 8, wherein the ice protection system is disposed on at least one of the pressure side and the suction side of the airfoil.

11. A wind turbine comprising,
a tower (810);
a rotor (820) coupled to a first end of the tower;
a blade (830) coupled to the rotor, the blade comprising:
an ice protection system (300 as claimed in any of claims 1 to 7; the rotary clade comprising an airfoil.
